Europäisches Patentamt

European Patent Office

Office européen des brevets

(19)

(11) **EP 1 378 761 A1**

(12) **EUROPEAN PATENT APPLICATION**
published in accordance with Art. 158(3) EPC

(43) Date of publication:
**07.01.2004 Bulletin 2004/02**

(51) Int Cl.⁷: **G01S 5/14**, G01C 15/00

(21) Application number: **02717100.8**

(22) Date of filing: **10.04.2002**

(86) International application number:
**PCT/JP2002/003580**

(87) International publication number:
**WO 2002/084321 (24.10.2002 Gazette 2002/43)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.04.2001 JP 2001112863**

(71) Applicants:
• **MITSUI & CO., LTD.**
  **Chiyoda-ku Tokyo-to 100-0004 (JP)**
• **Kabushiki Kaisha TOPCON**
  **Tokyo 174-8580 (JP)**

(72) Inventors:
• **MIYASAKA, Koji, c/o Mitsui & Co., Ltd.**
  **Tokyo 100-0004 (JP)**

• **MORI, Masakazu, c/o Mitsui & Co., Ltd.**
  **Tokyo 100-0004 (JP)**
• **SAKAKI, Kazuyuki,**
  **c/o Kabushiki Kaisha Topcon**
  **Tokyo 174-8580 (JP)**
• **TAKASU, Kenichi, c/o Kabushiki Kaisha Topcon**
  **Tokyo 174-8580 (JP)**
• **KOBAYASHI, Yuji, c/o Kabushiki Kaisha Topcon**
  **Tokyo 174-8580 (JP)**

(74) Representative: **Duhme, Torsten et al**
  **Witte, Weller & Partner,**
  **Patentanwälte,**
  **Postfach 10 54 62**
  **70047 Stuttgart (DE)**

(54) **SATELLITE POSITIONING SYSTEM**

(57) A GPS positioning system has: at least one mobile station to measure a positional coordinate by receiving radio wave from a satellite; a plurality of fixed stations that have predetermined positional coordinates and receive radio wave from the satellite; and arithmetic processing means, which is connected with at least one mobile station and a plurality of the fixed stations by communication, that selects an appropriate fixed station based on positioning data transmitted from at least one mobile station, and transmits reference positioning data of the fixed station selected to the mobile station.

A data server for GPS positioning has: a first communication interface, whose positional coordinate is fixed at a known point, that receives positioning data from a plurality of fixed stations that receive radio wave from a satellite; a second communication interface that receives positioning data from a mobile station whose positional coordinate is measurable by receiving radio wave from the satellite; and arithmetic processing means that selects an appropriate fixed station out of a plurality of the fixed stations based on the positioning data received via the second communication interface.

FIG. 3

EP 1 378 761 A1

**Description**

BACKGROUND OF THE INVENTION

Technical Field of the Invention

The present invention relates to a GPS positioning system (Satellite positioning system) in which a positional coordinate can be found by receiving radio wave from a satellite, and a data server for GPS positioning (Satellite positioning).

Prior Art

Kinematic positioning in a GPS is a survey method where a pair of antenna and a receiver are arranged in a fixed manner at a reference point whose positional coordinate is known and another pair of movable antenna and receiver perform measurement in a short time while sequentially moving among a large number of survey points.

There exists a real-time kinematic positioning (hereinafter, referred to as an RTK) as a developed type of the kinematic positioning. The RTK is a positioning method where a position being a measurement result can be obtained in a real-time.

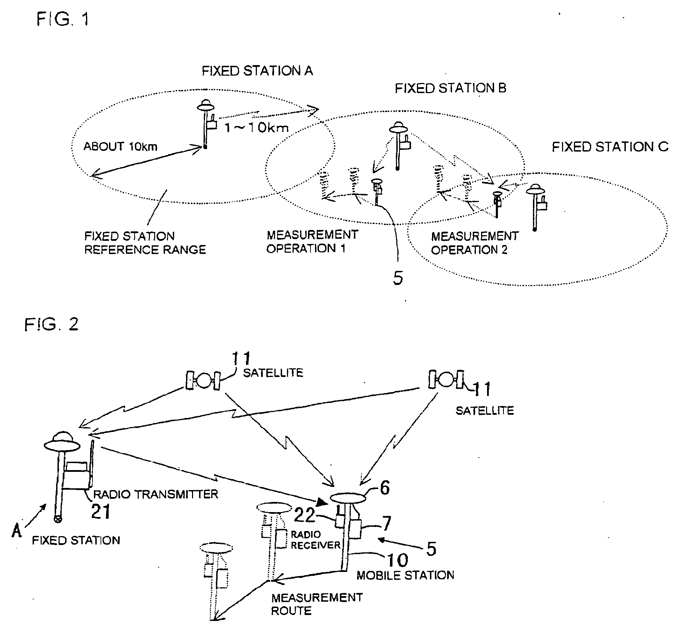

In the RTK, as shown in FIGs. 1 and 2, a plurality of fixed stations A, B, C that consist of antennas and receivers are arranged in reference points whose coordinates are known and a mobile station 5 that consists of an antenna and a receiver performs measurement while moving it sequentially.

The RTK simultaneously receives radio wave from a plurality of satellites 11 with the fixed stations A, B, C and the mobile station 5, analyzes positioning data in the mobile station 5 referring to positioning data obtained in the fixed stations A, B, C, and thus can immediately find a relative coordinate from the known points of the fixed stations A, B, C to the measurement point of the mobile station 5.

Further, to maintain measurement accuracy, a range where the mobile station 5 can refer to the predetermined fixed stations A, B, C (hereinafter, referred to as a fixed station reference range) is a range with a radius of about 10km around the fixed stations A, B, C. This is because influence to the accuracy at the point of analysis becomes measurable if the distance between the fixed stations A, B, C and the mobile station 5 is too remote. For example, the condition of the ionosphere and the atmosphere, in which radio wave from the satellites 11 simultaneously received by the both pass until it reaches the earth, changes considerably so that the influence to the accuracy at the point of analysis becomes measurable.

On the other hand, the positioning data needs to be transmitted from the fixed stations A, B, C to the mobile station 5 in order to enable the mobile station 5 to refer to the positioning data in the fixed stations A, B, C, and for this transmission, means for transmitting data from the fixed stations by a particular frequency radio is used. The fixed stations A, B, C have been provided with transmission means (a transmitter 21 having the frequency of 400MHz and the output of about 10mW, for example), and thus it has been constantly transmitting the positioning data. The mobile station 5 has been equipped with a receiver 22 for radio capable of receiving the radio wave from the transmitter 21, and thus it has been able to refer to the transmitted positioning data.

Note that the range where the mobile station 5 can refer to the fixed stations A, B, C in the RTK is 10km in radius technically as described above, but a range where radio wave reaches, which is an effective output range of the transmitter 21, is generally about 1km around the fixed stations A, B, C due to regulations by law.

Therefore, in the case where measurement of a point which is 1km or more apart from the fixed stations A, B, C is necessary, a radio relay station (not shown) is newly installed so that the positioning data from the fixed stations A, B, C has been receivable.

Generally, the radio frequencies used in transmitting the positioning data have been set so as to be different among the fixed stations A, B, C. This is because when the transmission frequencies are the same, it is difficult to distinguish (identify) the fixed stations A, B, C in the case where the measurement point is on a boundary area of the fixed station reference range or its vicinity, which becomes a cause of error measurement.

However, in the case where the fixed stations A, B, C to be referred to are different, receiving frequency of the mobile station 5 needs to be adjusted to the predetermined transmission frequencies of the fixed stations A, B, C.

Normally, the fixed stations A, B, C suitable for the measurement point are previously selected referring to a measurement operation plan and the frequency is adjusted before the measurement operation, but the different fixed stations A, B, C must be referred to depending on the point measured in this case. Then, a person who performs measurement needs to appropriately set the receiving condition of the receiving frequencies of the fixed stations A, B, C to which reference can be done, taking in consideration the current position of the measurement point, the positions of the fixed stations A, B, C, and additionally, receiving status of the positioning data, or the like. For this reason, the current position must be always taken in consideration.

In the case of radio, on the other hand, communication has been limited to one direction from the fixed stations A, B, C to the mobile station.

Furthermore, since the measurement result is stored in the mobile station 5, the measurement operation is limited by the storage capacity of the mobile station 5.

In the case where the measurement result is processed into a map or the like, the measurement result has needed to be brought out from the mobile station 5 to perform processing after the measurement operation ended.

SUMMARY OF THE INVENTION

The object of the present invention is to provide a GPS positioning system (Satellite positioning system) in which measurement can be performed simply and easily without taking the current position in consideration, and a data server for GPS positioning (Satellite positioning).

The solving means of the present invention is described in each of the foregoing claims.

BRIEF DESCRIPTION OF THE DRAWINGS

FIG. 1 is an example of a conventional mobile station.

FIG. 2 is a conceptual view showing a conventional RTK.

FIG. 3 is an entire view showing the outline of a system according to an embodiment of the present invention.

FIG. 4 is a conceptual view showing an RTK of the present invention.

FIG. 5 is a process flowchart in the data server of the present invention.

FIG. 6 shows an example in which a desired fixed station is selected by a distance.

FIG. 7 shows an example in which a desired fixed station is selected by an area.

PREFERRED EMBODIMENTS OF THE INVENTION

The preferred embodiments of the present invention will be described based on the drawings as follows.

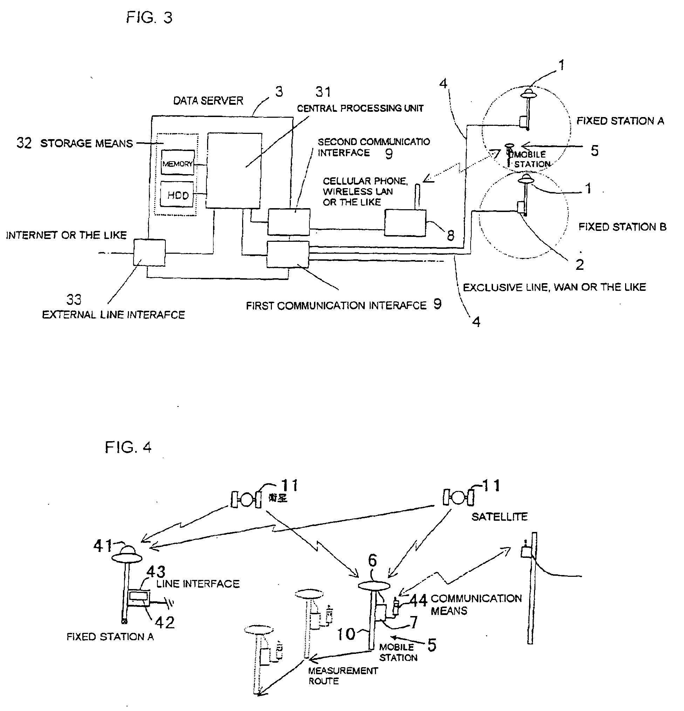

FIG. 3 is the entire configuration view showing an embodiment of the satellite positioning system according to the present invention.

The GPS positioning system (Satellite positioning system) has: at least one mobile station 5; a plurality of fixed stations A, B; and an arithmetic processing unit (a data server 3, preferably) connected with the mobile station 5 and the fixed stations A, B via communication means 4, 8.

The data server 3 for GPS positioning (Satellite positioning) consists of a central processing unit 31, a storage unit 32, a communication interface unit and the like.

The communication interface unit includes: a first communication interface 9 that basically receives the positioning data from each of a plurality of the fixed stations A, B; and a second communication interface 9 that transmits/receives data to/from at least one mobile station 5.

The first communication interface 9 is used to receive the positioning data sent from the fixed stations A, B via the communication means 4.

Herein, the positioning data is a generic name of data of a format defined in satellite survey, which is data that could be dealt with such as receive data or positional information after analysis. The positioning data includes binary data, text data or the like.

The fixed stations A, B are regularly arranged in a fixed manner at points whose positional coordinates are known, and receive radio wave from the satellites 11 constantly or periodically to obtain positioning data regarding the installation positions.

The fixed stations A, B are provided with the communication means 4 capable of transmitting the positioning data measured, and the positioning data is transmitted constantly or periodically. Accordingly, in the communication means 4 in the first communication interface 9, the fixed station B is arranged at a known position in a fixed manner, and the means 4 is capable of communicating the positioning data in high-speed. Therefore, the communication means 4 in the first communication interface 9 is preferably an always-on connection line such as a WAN and an exclusive line.

Further, in the communication means 4, data is generally transmitted on a data format called a CMR where the receive data from the satellites 11 and the known coordinates are combined. The CRM data is also called a correction data of the mobile station 5 in the RTK.

The second communication interface 9 is used to transmit/receive various data to/from the mobile station 5.

An external interface 33 is connected to the Internet or the like.

Explaining a receiving function, the mobile station 5 receives radio wave from the satellites 11 to obtain the positioning data, for example. The communication means provided for the mobile station 5 transmits the positioning data. Further, the mobile station 5 also can receive positional information data calculated with a simple method based on the positioning data.

Explaining a transmission function, the mobile station 5 transmits the correction data used for analysis based on the positioning data from the appropriate fixed station A, B, C.

Furthermore, regarding the communication means 8 in the second communication interface 9, means capable of wireless communication (two-way communication means) such as a cellular phone, a PHS (Personal Handyphone System) and a wireless LAN is desirable, because measurement is performed while the mobile station 5 moves within a survey range.

Incidentally, time lag at the point of analysis in the mobile station 5 can be minimized when high-speed communication means is used as the communication means 8.

The central processing unit 31, based on the positioning data of mobile station 5 obtained via the second communication interface 9, selects the fixed station A or B most suitable for the mobile station 5, and transmits the positioning data of the fixed station A or B selected or correction information based on the positioning data to the mobile stations 5.

The storage means 32 is capable of storing flexibly various data received from the mobile station 5 and various information such as information regarding the person who performs measurement, a user or the like, other than data necessary for the processing of the central processing unit 31.

The storage means 32 also stores a survey operation range, environmental information of the mobile station 5 or the like, other than the positional information of the fixed stations A, B, C, the positioning data to be received, and the positioning data or the positional information from the mobile station 5, and they can be utilized later.

The fixed stations A, B, C has: a receiving antenna 41; a receiver 42; a data line apparatus 43 that transmits the positioning data to the data server 3.

The mobile station 5 has: a receiving antenna 6; a receiver 7; and communication means 44 (an interface to which communication means can be connected) capable of two-way communication with the data server 3.

It is preferable that these equipments have portability such that an operator can carry them and are capable of operating independently using a battery as a power source. Although a chemical secondary battery is generally used as the battery, a physical battery by an electric double layer capacitor (Energy Capacitor System) is desirable due to a stable output and a lifetime because performance deterioration is small as well.

Further, the antenna 6 has a bubble tube capable of detecting perpendicularity in order to be installed on a measurement point accurately, and is in an installed state on rod member 10, where its lower end is pointed and the antenna 6 can be installed on its upper end.

The lower end of the rod member 10 is placed on the measurement point to maintain a perpendicular state by the bubble tube or the like, and thus the antenna 6 can be arranged accurately above the measurement point.

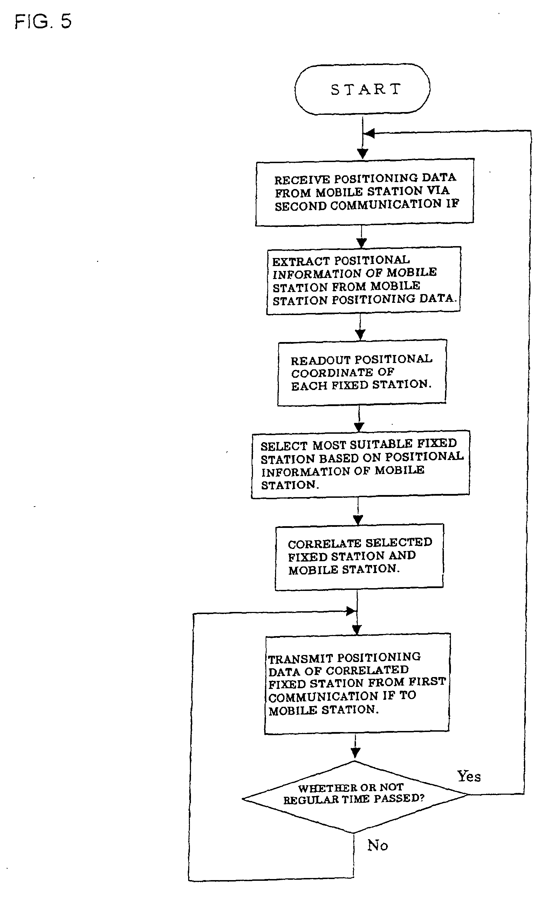

FIG. 5 shows the process flow in the data server 3.

An example of a preferred specific survey operation will be exemplified.

The fixed stations A, B are equipped with the receiving antenna 1, the receiver 2, and the data line apparatus 4 that transmits the positioning data to the data server 3.

The mobile station 5 is equipped with the receiving antenna 6, the receiver 7, and the communication means 8 capable of two-way communication with the data server 3, or the interface 9 capable of connecting the communication means 8. Note that these equipments have portability such that the operator can carry them and are capable of operating independently using the battery as the power source.

Further, the antenna 6 of the mobile station 5 has the bubble tube (not shown) capable of detecting perpendicularity in order to be installed on the measurement point accurately, and is in an installed state on the rod member 10, where its lower end is pointed and the antenna 6 can be installed on its upper end.

The lower end of the rod member 10 is placed on the measurement point to maintain the perpendicular state by the bubble tube or the like, and thus the antenna 6 can be arranged accurately above the measurement point.

A specific survey operation will be described based on a preferred example.

(1) Initializing and setting the mobile station 5.
   With the operation procedure of a general kinematic survey, the mobile station 5 is arranged at the reference point to perform initializing operation.
   At this point, the communication means 8 equipped performs communication setting, confirmation of communication condition, or the like between the server 3 and the second communication interface 9.

(2) Single positioning is performed receiving shortwave from the satellites 11 while the mobile station 5 is moved based on the measurement plan. Generally, the positional coordinate information obtained by the single positioning basically has an error of 20m to 100m.
   The mobile station 5 transmits the positioning data obtained by the single positioning to the data server 3 via the communication means 8.
   At this point, the positioning data sent from the mobile station 5 is transmitted on a format called an NMEA standardized in the GPS.

(3) The data server 3 receives the positioning data transmitted from the mobile station 5 via the second communication interface 9.
   The data server 3 receives reference data, which is obtained by receiving radio wave from the satellites 11, from a plurality of the fixed stations A, B via the first communication interface 9 and the data line apparatus 4. The reference data is generally in the "CRM" format where the receive data and the positional coordinates of the fixed stations A, B are combined.
   The data server 3 selects the fixed station A or B arranged in an appropriate position for the current position of the mobile station 5 based on the positional information in the positioning data from the mobile station 5.
   On selecting the fixed station A or B, the data server 3 transmits the reference data, which has been received from the selected fixed station A or B via the first communication interface 9, to the mobile station 5 as the correction information at the point of positional analysis via the second communication interface 9.

(4) The mobile station 5 receives the reference data from the appropriate fixed station A, B, which has been transmitted from the data serer 3, corrects the error by performing analysis together with the positioning data obtained by the single positioning, and obtains accurate positional information.

With this correction, positioning accuracy of approximately 10mm can be obtained. The result obtained is stored in storage means (not shown) equipped with the mobile station 5, and processing such as creation of a map is performed in another place after the operation ends. Furthermore, communication means (not shown) of the mobile station 5 may transmit it to the data server 3 (or another positioning result to a place where processing can be done).

Next, a method will be described where the data server 3 selects the most suitable fixed station A or B for the mobile station 5.

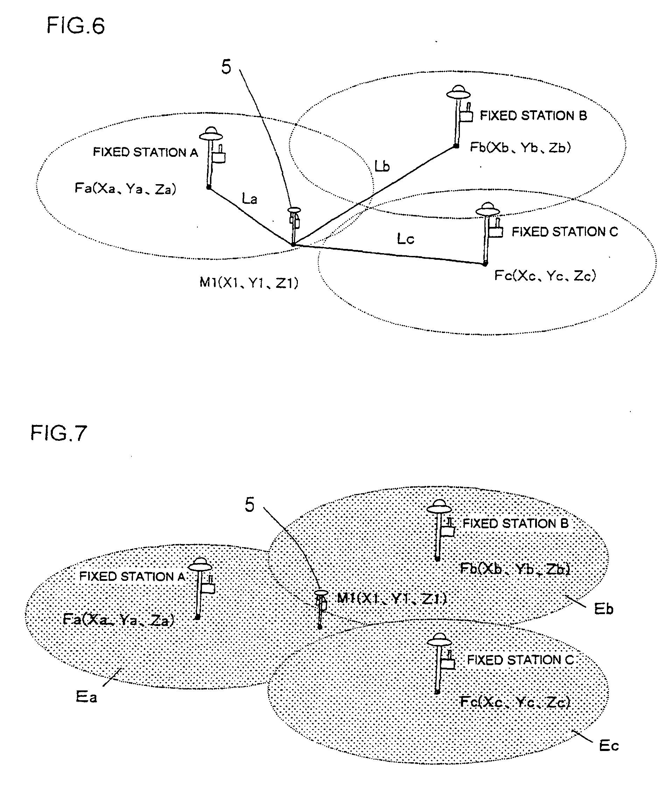

Firstly, selection by a distance will be described referring to FIG. 6.

The distance between the mobile station 5 and each of the fixed stations A and B is severally found from the received positional coordinate data of the mobile station 5 and the known positional coordinates where a plurality of the fixed stations A, B are installed, and the fixed station A or B having the shortest distance is selected.

Explanation is made referring to FIG. 6, where the positional coordinate data that the mobile station 5 obtained by the single positioning is set to M1 (X1, Y1, Z1).

The known positional coordinates of a plurality of the fixed stations A, B, C are set as follows.

Fixed station A: FA (XA, YA, ZA)
Fixed station B: FB (XB, YB, ZB)
Fixed station C: FC (XC, YC, ZC)

At this point, from the assumption that the distance between the mobile station 5 and the fixed station A is a distance LA, it follows that:

$$LA\sqrt{X_A^2 + Y_A^2 + Z_A^2}$$

A distance LB and a distance LC are severally found regarding the fixed station B, C in the same manner, and the fixed station A, B or C having the smallest value, that is, having the shortest distance with the mobile station 5 is selected.

During continuous measurement, the distance between the mobile station 5 and a plurality of the fixed stations A, B, C is calculated periodically, the relation with the mobile station 5 is changed if the fixed station A, B or C having an even shorter slant distance appears, and then new data of the fixed station A, B or C is transmitted.

Next, referring to FIG. 7, description will be made for selection by an area.

By setting areas Ea, Eb, Ec that can be referred to previously concerning each of the fixed stations A, B, C, the fixed station A, B or C is selected according to the area Ea, Eb, Ec that includes the current position of the mobile station 5.

As shown in FIG. 7, the areas Ea, Eb, Ec that can be referred to for each fixed station are previously set.

Basically, circular areas Ea, Eb, Ec having the radius of 10km from the fixed stations A, B, C are formed, and when the areas Ea, Eb, Ec overlap with each other, one fixed station A, B or C to be referred to is selected depending on the environment or the like of the point.

When the positional coordinate data is sent from the mobile station 5, the data server 3 finds to which area Ea, Eb, Ec the positional coordinate corresponds. As a result, the fixed station A, B or C to be referred to is selected according to the area Ea, Eb, Ec to which the mobile station 5 corresponds, and the data server 3 transmits the reference data from the selected fixed station A, B or C to the mobile station 5 via the second communication interface 9.

Regarding the foregoing areas Ea, Eb, Ec, the operator can easily recognize the areas by correlating them with the area where the positioning operation is performed.

Note that selection of the fixed stations A, B, C may be performed at every predetermined time or periodically by previously setting the time. This is because the fixed stations A, B, C to be referred to do not change frequently on a moving speed of a general measurement operation.

Further, single positioning information in the mobile station can be included in NMEA data (observation data) constantly transmitted from the mobile station every ten second (this can be changed by setting). In this case, the server does not request transmission of the single positioning information to the mobile station.

For selection standard of the fixed station, database such as 'This fixed station covers this area' can be used other than the 'slant distance'.

(1) The most suitable fixed station can be referred to without taking the current position into consideration, and the highly accurate RTK positioning can be realized.

(2) Adjustment of a radio receiving frequency by the operator, which has been necessary in transmission by radio, is unnecessary.

(3) Even in the case of measuring across a plurality of the reference fixed station areas, measurement can be performed without requiring preparation.

(4) Environmental data (weather data or the like) at the point of positioning the mobile station can be obtained.

**Claims**

1. A GPS positioning system, comprising:

    at least one mobile station to measure a positional coordinate by receiving radio wave from a satellite;
    a plurality of fixed stations that have predetermined positional coordinates and receive radio wave from the satellite; and
    arithmetic processing means, which is connected with at least one mobile station and a plurality of the fixed stations by communication, that selects an appropriate fixed station based on positioning data transmitted from at least one mobile station, and transmits reference positioning data of the fixed station selected to the mobile station.

2. The GPS positioning system according to Claim 1, wherein each positional coordinate of a plurality of the fixed stations is fixed at a known point, and a constitution is formed that the appropriate fixed station is selected based on positioning data transmitted from the mobile station to the arithmetic processing means.

3. The GPS positioning system according to any one of Claim 1 and 2, wherein the system has a constitution that the arithmetic processing means selects the appropriate fixed station out of a plurality of the fixed stations.

4. The GPS positioning system according to any one of Claims 1 to 3, wherein reference positioning data transmitted from the arithmetic processing means to the mobile station is receive data from the satellite in fixed reference positioning means.

5. The GPS positioning system according to any one of Claims 1 to 4, wherein the positioning data transmitted from the mobile station to the arithmetic processing means is the receive data received from the satellite.

6. The GPS positioning system according to any one of Claims 1 to 5, wherein the positioning data transmitted from the mobile station to the arithmetic processing means is positional coordinate data obtained by single positioning of the mobile station.

7. The GPS positioning system according to any one of Claims 1 to 6, wherein when the fixed station selected by the arithmetic processing means is changed, signal that informs of the change of the fixed station is transmitted from the arithmetic processing means to the mobile station.

8. The GPS positioning system according to any one of Claims 1 to 7, wherein the mobile station is provided with display means that displays data received.

9. The GPS positioning system according to any one of Claims 1 to 8, wherein in the case of a plurality of the mobile stations, the system has a constitution that the arithmetic processing means selects an appropriate reference fixed positioning means for each mobile station.

10. The GPS positioning system according to any one of Claims 1 to 9, wherein in the case of a plurality of the mobile stations, the system has a constitution that the arithmetic processing means transmits reference positioning data from an appropriate fixed station to each mobile station.

11. The GPS positioning system according to any one of Claims 1 to 10, wherein the mobile station is a mobile station for kinematic positioning, whose antenna and receiver are movable.

12. A data server for GPS positioning, comprising:

    a first communication interface, whose positional coordinate is fixed at a known point, that receives positioning data from a plurality of fixed stations that receive radio wave from a satellite;
    a second communication interface that receives positioning data from a mobile station whose positional coordinate is measurable by receiving radio wave from the satellite; and
    arithmetic processing means that selects an appropriate fixed station out of a plurality of the fixed stations based on the positioning data received via the second communication interface.

13. The data server for GPS positioning according to Claim 12, wherein the arithmetic processing means transmits reference positioning data sent from the fixed station selected by the arithmetic processing means to the mobile station via the second communication interface.

14. The data server for GPS positioning according to any one of Claim 12 and 13, wherein the second communication interface is radio communication means capable of two-way communication.

**15.** The data server for GPS positioning according to any one of Claims 12 to 14, wherein the mobile station is a mobile station for kinematic positioning, whose antenna and receiver are movable.

FIG. 1

FIXED STATION A

FIXED STATION B

FIXED STATION C

1~10km

ABOUT 10km

FIXED STATION
REFERENCE RANGE

MEASUREMENT
OPERATION 1

MEASUREMENT
OPERATION 2

5

FIG. 2

11 SATELLITE

11
SATELLITE

RADIO TRANSMITTER

21

6

22

7

5

A

FIXED STATION

RADIO
RECEIVER

10
MOBILE STATION

MEASUREMENT
ROUTE

FIG. 3

DATA SERVER 3 31 CENTRAL PROCESSING UNIT

32 STORAGE MEANS

MEMORY

HDD

SECOND COMMUNICATIO INTERFACE 9

CELLULAR PHONE, WIRELESS LAN OR THE LIKE

INTERNET OR THE LIKE

33 EXTERNAL LINE INTERAFCE

FIRST COMMUNICATION INTERAFCE 9

4

1

FIXED STATION A

7 MOBILE STATION 5

1

FIXED STATION B

8

2

EXCLUSIVE LINE, WAN OR THE LIKE

4

FIG. 4

11 衛星

11 SATELLITE

41

43 LINE INTERFACE

42

FIXED STATION A

6

44 COMMUNICATION MEANS

10

7

5

MOBILE STATION

MEASUREMENT ROUTE

FIG. 5

```
┌─────────────┐
│    START    │
└─────────────┘
       │
       ▼
┌──────────────────────────┐
│ RECEIVE POSITIONING DATA │
│ FROM MOBILE STATION VIA  │
│ SECOND COMMUNICATION IF  │
└──────────────────────────┘
       │
       ▼
┌──────────────────────────┐
│ EXTRACT POSITIONAL       │
│ INFORMATION OF MOBILE    │
│ STATION FROM MOBILE      │
│ STATION POSITIONING DATA.│
└──────────────────────────┘
       │
       ▼
┌──────────────────────────┐
│ READOUT POSITIONAL       │
│ COORDINATE OF            │
│ EACH FIXED STATION.      │
└──────────────────────────┘
       │
       ▼
┌──────────────────────────┐
│ SELECT MOST SUITABLE FIXED│
│ STATION BASED ON POSITIONAL│
│ INFORMATION OF MOBILE    │
│ STATION.                 │
└──────────────────────────┘
       │
       ▼
┌──────────────────────────┐
│ CORRELATE SELECTED       │
│ FIXED STATION AND        │
│ MOBILE STATION.          │
└──────────────────────────┘
       │
       ▼
┌──────────────────────────┐
│ TRANSMIT POSITIONING     │
│ DATA OF CORRELATED       │
│ FIXED STATION FROM FIRST │
│ COMMUNICATION IF TO      │
│ MOBILE STATION.          │
└──────────────────────────┘
       │
       ▼
   ╱─────────────╲        Yes
  ╱ WHETHER OR NOT ╲─────────
  ╲ REGULAR TIME    ╱
   ╲  PASSED?      ╱
    ╲─────────────╱
         │ No
```

FIG.6

FIG.7

## INTERNATIONAL SEARCH REPORT

| | International application No. |
|---|---|
| | PCT/JP02/03580 |

**A. CLASSIFICATION OF SUBJECT MATTER**
Int.Cl⁷ G01S5/14, G01C15/00

According to International Patent Classification (IPC) or to both national classification and IPC

**B. FIELDS SEARCHED**

Minimum documentation searched (classification system followed by classification symbols)
Int.Cl⁷ G01S5/00-5/14, G01C15/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 7-12918 A (Sokkia Co., Ltd.), 17 January, 1995 (17.01.95), Full text; all drawings (Family: none) | 1-15 |
| Y | JP 11-83976 A (Seiko Epson Corp.), 26 March, 1999 (26.03.99), Full text; all drawings (Family: none) | 1-15 |
| A | JP 9-311177 A (Seiko Epson Corp.), 02 December, 1997 (02.12.97), Full text; all drawings (Family: none) | 1-15 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 April, 2002 (26.04.02) | 21 May, 2002 (21.05.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP02/03580

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 95/22769 A1 (Trimble Navigation), 24 August, 1995 (24.08.95), Full text; all drawings & US 5519620 A & US 5602741 A & US 5757646 A & US 5890091 A & US 5935194 A & JP 9-509489 A | 1-15 |
| A | US 6061632 A (Trimble Navigation Ltd.), 09 May, 2000 (09.05.00), Full text; all drawings (Family: none) | 1-15 |

Form PCT/ISA/210 (continuation of second sheet) (July 1998)